# EUROPÄISCHE PATENTSCHRIFT

(11) **EP 1 097 647 B1**
(45) Veröffentlichungstag und Bekanntmachung des Hinweises auf die Patenterteilung: **21.06.2006**
(21) Anmeldenummer: 00117985.2
(22) Anmeldetag: 22.08.2000
(51) Int. Cl.: A23G 3/02

(54) **Vorrichtung und Verfahren zur Herstellung von Bonbon-Massen**
Apparatus and process for making confectionery masses
Appareil et procédé de fabrication de masses de bonbon

(30) Priorität: 26.10.1999 DE 19951462
(43) Veröffentlichungstag der Anmeldung: 09.05.2001
(73) Patentinhaber: LIPP Mischtechnik GmbH, 68309 Mannheim (DE)
(72) Erfinder: Lipp, Eberhard, 67122 Altrip (DE)
(74) Vertreter: Petersen, Frank

(56) Entgegenhaltungen:
- EP-A- 0 418 106
- DE-A- 4 313 149
- US-A- 4 732 775
- US-A- 5 472 733
- US-A- 5 779 805

## Beschreibung

Die Erfindung betrifft eine Vorrichtung zur Herstellung flüssiger Zuckerwarenrohmasse, mit wenigstens einer Dosiereinrichtung zum Zuführen von zuckerhaltigen Trockenkomponenten und von Flüssigkomponenten, sowie mit einem Mischgerät.

Eine Vorrichtung dieser Art ist bereits bekannt aus der EP 0418106.

Die Herstellung von Zuckerwarenrohmassen für Hartbonbons, Karamelbonbons aber auch Weichkaramel oder Fondant erfolgt allgemein in sogenannten Kochanlagen, die aus Löse- und Mischgeräten mit nachgeschalteter Eindampfanlage bestehen.

In solchen Anlagen wird eine zuckerhaltige Trockenkomponente in Wasser gelöst, wobei dieser Lösung dann in einem Mischgerät auch noch andere Komponenten beigemischt werden können, wie beispielsweise Glukose, Milchmodifikationen, Stärke und andere Hydrokolloide.

Einem derartigen Gemisch wird dann in Eindampfgeräten das Wasser wieder entzogen, wobei die Temperatur der eingedampften Masse am Ende noch so hoch sein muß, daß der Zucker auch bei reduziertem Wassergehalt noch gelöst ist ohne auszukristallisieren, um so auch bei der nachfolgenden Abkühlung und Formgebung zu Bonbons eine unerwünschte Kristallisation zu verhindern.

Das bis hierher beschriebene Verfahren erfordert aufwendige Verdampfungsanlagen, wobei das Eindampfen von derart stark zuckerhaltigen Massen sehr problematisch ist, da sich an den wärmeübertragenden Flächen in der Verdampfungsanlage mit der Zeit Zucker anheften kann sowie eventuell vorhandene Beimengungen wie Stärke, Milchproteine etc., was den Wärmeübergang erheblich beeinträchtigt.

Außerdem führt dies dann noch zu der Gefahr der Überhitzung, so daß der Zucker gegebenenfalls karamelisiert und harte Beläge bildet, die dann nur mit erheblichem Aufwand zu entfernen sind. Auch kann dabei die Zuckerwarenrohmasse aufgrund der zu hohen Temperaturen insbesondere auch geschmacklich geschädigt werden.

Aufgabe der vorliegenden Erfindung ist es daher, eine Vorrichtung und ein Verfahren zur Herstellung flüssiger Zuckerwarenrohmasse anzugeben, bei denen die beschriebene Problematik nicht auftritt.

Diese Aufgabe wird erfindungsgemäß dadurch gelöst, daß bei einer Vorrichtung wie oben angegeben, bei der das vorgesehene Mischgerät ein Hochschermischer ist, die Komponenten durch einen Rotor intensiv gerührt werden, wobei sie sich dann aufgrund der dabei direkt am Zuckerkristall entstehenden Reibungswärme durch eine Verflüssigung des Zuckerkristalls verflüssigen und eine Regeleinrichtung vorgesehen ist, die abhängig von der Temperatur im Hochschermischer eine Drehzahlanpassung des Rotors vornimmt.

Der Erfindung liegt die Erkenntnis zugrunde, daß bei dem bisher angewandten Verfahren die Flüssigkeit auch zu einem großen Teil benötigt wird, um einen Wärmetransport zu den Einzelteilchen der Trockenkomponenten bewirken zu können. Ein mit nur wenig Wasser versetzter Zucker wird so zum Beispiel nur leicht angefeuchtet sein, einen Wärmetransport zu einzelnen Zuckerkristallen kann das Wasser aber nicht gewährleisten. Durch Verwendung eines Hochschermischers wird demgegenüber die Reibung direkt am Zuckerkristall erzeugt und die dort entstehende Reibungswärme führt dann direkt zu einer Verflüssigung des Zuckerkristalles.

Um die in dem Hochschermischer vorhandenen Komponenten auf der benötigten Temperatur zu halten, wird eine spezielle Regeleinrichtung vorgesehen. Diese regelt abhängig von der Temperatur im Hochschermischer die Drehzahl des Rotors. Bei sinkenden Temperaturen wird die Drehzahl erhöht und damit zusätzliche Reibungswärme bzw. Scherenergie den Komponenten zugeführt, so daß die Temperatur wieder steigt. Bei entsprechend zu hohen Temperaturen wird die Drehzahl des Rotors abgesenkt.

Die Erfindung hat somit den Vorteil, daß es nicht mehr nötig ist, den zuckerhaltigen Trockenkomponenten viel Wasser zuzusetzen, das im Nachhinein mit großem Aufwand wieder verdampft werden muß. Damit entfällt zum einen der hohe Energieaufwand für die Wasserverdampfung. Außerdem treten die oben beschriebenen Probleme innerhalb der Verdampfungsanlagen nicht mehr auf. Die Herstellung von flüssiger Zuckerwarenrohmasse wird damit sowohl einfacher als auch preiswerter möglich.

Für den Hochschermischer hat sich eine Konstruktion als besonders günstig erwiesen, bei dem er ein Gehäuse aufweist, in dem der Rotor vorgesehen ist. Dieser Rotor ist dann mit Mischflügeln versehen, die die im Hochschermischer vorhandenen Komponenten in Axialrichtung lenken, wobei sie mit Statorelementen klämmend ineinandergreifen unter Bildung von Mahlspalten an ihren radial äußeren Enden. Die Statorelemente sind dabei an der Innenwand des Gehäuses radial nach innen ragend ringförmig angeordnet. Ein derartiger Hochschermischer ist beispielsweise in der DE-PS 43 13 149 beschrieben.

Ein derartiger Hochschermischer kann dann auch kontinuierlich durch die Trocken- und Flüssigkomponenten durchströmt werden, wobei er dann vorteilhafterweise eine Komponetenzuführzone in einem in Strömungsrichtung vorderen Bereich aufweist sowie einen Austritt in einem in Strömungsrichtung hinteren Bereich. Der Rotor ist dann in dem dazwischenliegenden Bereich vorgesehen.

Es hat sich als günstig erwiesen, dem Rotor ein Zentrifugalpumpenrad nachzuschalten, wodurch eine für die Förderung der flüssigen Zuckerwarenrohmasse günstige Druckerhöhung zu erreichen ist.

Für die Trockenkomponenten kann dem Hochschermischer noch ein Vormischer vorgeschaltet sein, der die Trockenkomponenten ausreichend homogenisiert.

Im übrigen wird noch vorgeschlagen, dem Hochschermischer einen mit Unterdruck beaufschlagbaren Zwischenbehälter nachzuschalten. Durch den hier herrschenden Unterdruck kann in der Zuckerwarenrohmasse noch zuviel enthaltenes Wasser verdampft werden unter Ausnutzung der in der Zuckerwarenrohmasse gespeicherten Wärme. Die Zuckerwarenrohmasse kann dann in einer genau gewünschten Konsistenz weiter verarbeitet werden.

Das hier beschriebene Verfahren eignet sich insbesondere auch dazu, um Ausschußware wieder aufzuarbeiten. Dabei wird dem Zuckerwarenbruch etc. lediglich die Menge an Flüssigkeit wieder zugemischt, die bei der abschließenden Ausformung von Bonbons aus der Zuckerwarenrohmasse verdampfte. Das bisher übliche vollständige Auflösen des Zuckerwarenausschusses in Flüssigkeit wird damit unnötig.

Bei der Herstellung von Frischware hat die hier beschriebene Vorrichtung und das damit einhergehende Verfahren noch den Vorteil, daß Aroma- und Farbstoffe direkt in den lediglich einen Mischvorgang zugeführt werden können, ohne daß hierfür separat Mischvorgänge und Mischvorrichtungen vorgesehen werden müßten. Es sei ansonsten noch erwähnt, daß es teilweise auch ausreichend sein kann, lediglich die flüssigen Aroma- und Farbstoffe und den in gewissem Umfang wasserenthaltenden Glukoseanteil den Feststoffen zuzusetzen, um den für die fertige Zuckerwarenrohmasse benötigten Wassergehalt sicherzustellen.

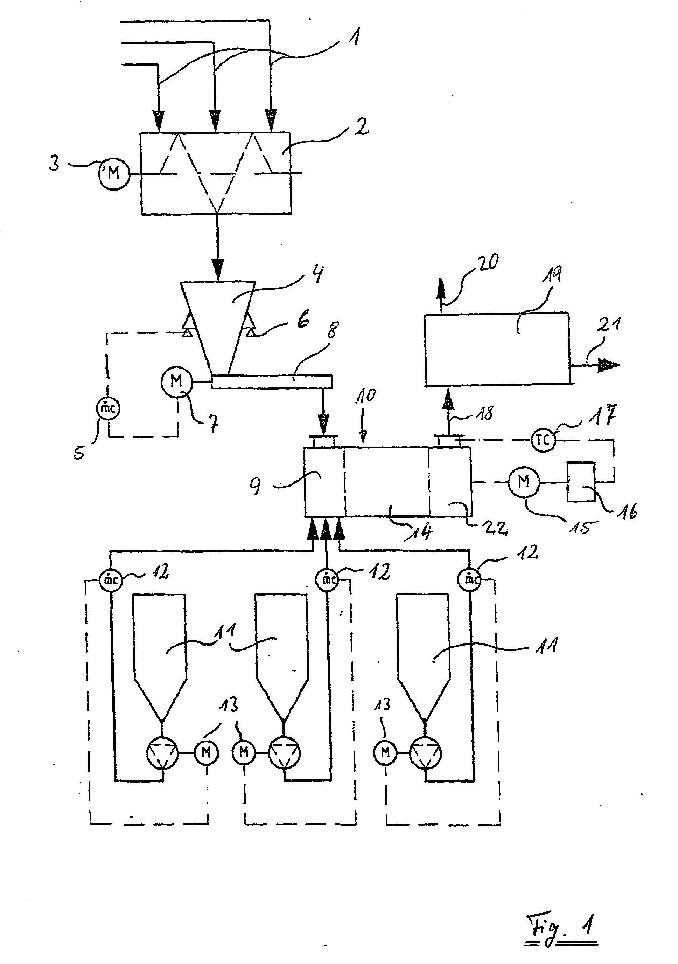

Weitere Vorteile und Merkmale der Erfindung ergeben sich aus der nachfolgenden Beschreibung eines Ausführungsbeispiels. Dabei zeigt
- Figur 1: die schematische Ansicht einer Vorrichtung zur Erzeugung von flüssiger Zuckerwarenrohmasse.

In Figur 1 erkennt man eine schematische Darstellung einer Anlage zur Herstellung von flüssiger Zuckerwarenrohmasse.

Trockene, feste bzw. pulverförmige und zuckerhaltige Komponenten 1 werden einem Vormischer 2 zugeführt, der durch einen Motor 3 angetrieben wird. Die derart vorgemischten und homogenisierten Festkomponenten werden dann in den Trichter 4 einer Dosiereinrichtung gegeben. Bei dieser Dosiereinrichtung wird über eine Mengensteuerung 5, die Gewichtsdaten von Meßzellen 6 erhält, ein Motor 7 angetrieben, der dann über eine Schnecke 8 die notwendige Menge an Festkomponenten in eine Komponetenzuführzone 9 eines Hochschermischers 10 gibt. Dieser Komponentenzuführzone 9 werden gleichzeitig aus Tanks 11 Flüssigkomponenten zugeführt, bei denen es sich beispielsweise um Glukose mit einem relativ hohen Wassergehalt (von bis zu ca. 20 %) handeln kann, als auch um Farb- und Aromastoffe. Auch die aus den Tanks 11 der Komponentenzuführzone 9 des Hochschermischers 10 eingeleiteten Flüssigkeitsmengen werden durch entsprechende Mengensteuerungen 12 geregelt, die auf entsprechende Pumpenmotoren 13 einwirken.

In der Komponentenzuführzone 9 werden die Festkomponenten und die Flüssigkomponenten miteinander vermengt und dann in einen mittleren Bereich 14 des Hochschermischers 10 einem Rotor zugeführt, der in hier nicht dargestellter Weise die Komponenten in der Axialrichtung transportiert und dabei mit auf ihm sitzenden Mischflügeln mit Statorelementen kämmend ineinandergreift, die an der Innenwand des Gehäuses radial nach innenragend ringförmig angeordnet sind. Die dabei gebildeten Mahlspalte in der Breite von etwa einem Millimeter bewirken, daß durch sie hindurchgepreßte Komponenten sich aufgrund der Friktion erwärmen, wobei der Zucker sich dann aufgrund seiner speziellen Eigenschaft verflüssigt. Die Drehzahlen, mit denen der Rotor dabei umläuft können je nach Bedarf zwischen 600 und 3500 Umdrehungen pro Minute liegen.

Die Drehzahl des Rotors, der durch einen Motor 15 angetrieben ist wird dabei geregelt durch eine Steuereinheit 16, der als Leitwert über eine Temperaturmeßsonde 17 die Temperatur der aus dem Hochschermischer 10 austretenden Zuckerwarenrohmasse erfaßt. Bei steigender Temperatur wird die Drehzahl des Motors 15 abgesenkt, bei sinkender Temperatur wird die Drehzahl des Motors 15 erhöht. Diese Drehzahlverstellung kann kontinuierlich erfolgen.

Die aus dem Hochschermischer austretenden Schmelze 18 wird noch in einen Zwischenbehälter 19 eingefüllt, der mit Unterdruck zu beaufschlagen ist. In diesem Zwischenbehälter wird dann noch überflüssiges Wasser 20 aus der Schmelze entzogen unter Ausnutzung der in der Schmelze gespeicherten Wärme. Die verbleibende flüssige Zuckerwarenrohmasse 21 kann dann in der bekannten Art und Weise weiterverarbeitet werden.

Es sei an dieser Stelle noch erwähnt, daß sich die beschriebene Vorrichtung und das Verfahren auch dazu eignet, Zuckerwarenausschuß wieder neu zu verarbeiten. Dann wird in den Trichter 4 der genannte Zuckerwarenausschuß gefüllt und über die Schnecke 8 in der beschriebenen Weise der Komponentenzuführzone 9 des Hochschermischers 10 zugeführt.

Als flüssige Komponente aus den Tanks 11 wird dann lediglich noch Wasser zugesetzt.

In dem mittleren Bereich 14 des Hochschermischers 10 wird dann das Zuckerwarenausschußmaterial wieder verflüssigt und gemischt und wird dann als Schmelze 18 gegebenenfalls über den Zwischenbehälter 19 wieder als Zuckerwarenrohmasse ausgegeben.

Es sei noch bemerkt, daß in dem Hochschermischer 10 dem beschriebenen Rotor noch ein Zentrifugalpumprad 22 nachgeschaltet sein kann, mit dem die Schmelze den nachgeschalteten Elementen mit einem zusätzlichen Druck von bis zu 1 bar zugeführt werden kann.

Die beschriebene Vorrichtung und das beschriebene Verfahren haben insbesondere den Vorteil, daß im Hochschermischer 10 nur sehr wenig Flüssigkeit zugeführt werden muß, um eine ausreichende Verflüssigung der Zuckerwarenrohmasse zu erreichen und somit nicht mit hohem Aufwanddiese Flüssigkeit nachträglich wieder entfernt, d. h. verdampft werden muß.

## Patentansprüche

1. Vorrichtung zur Herstellung flüssiger Zuckerwarenrohmasse mit wenigstens einer Dosiereinrichtung zum Zuführen von zuckerhaltigen Trockenkomponenten (1) und von Flüssigkomponenten (11), sowie mit einem Mischgerät (10),
**dadurch gekennzeichnet,**
**daß** das Mischgerät (10) ein Hochschermischer ist und
**daß** die Komponenten (1, 11) durch einen Rotor intensiv gerührt werden und sie sich aufgrund der dabei direkt am Zuckerkristall entstehenden Reibungswärme durch eine Verflüssigung des Zuckerkristalls verflüssigen und daß eine Regeleinrichtung (16) vorgesehen ist, die abhängig von der Temperatur im Hochschermischer (10) eine Drehzahlanpassung des Rotors vornimmt.

2. Vorrichtung gemäß Anspruch 1,
**dadurch gekennzeichnet,**
**daß** der Hochschermischer (10) ein Gehäuse aufweist, in dem der Rotor vorgesehen ist, der mit Mischflügeln die Komponenten in Axialrichtung lenkt, wobei die Mischflügel mit Statorelementen, die an der Innenwand des Gehäuses radial nach innenragend ringförmig angeordnet sind, kämmend ineinandergreifen, unter Bildung von Mahlspalten an ihren radial äußeren Enden.

3. Vorrichtung gemäß Anspruch 1,
**dadurch gekennzeichnet,**
**daß** der Hochschermischer (10) kontinuierlich durch Komponenten durchströmt ist und eine Komponentenzuführzone (9) in einem in Strömungsrichtung vorderen Bereich sowie einen Austritt in einem in Strömungsrichtung hinteren Bereich aufweist, wobei der Rotor in einem dazwischenliegenden Bereich (14) vorgesehen ist.

4. Vorrichtung gemäß Anspruch 1,
**dadurch gekennzeichnet,**
**daß** ein Vormischer (2) zum Homogenisieren von Trockenkomponenten (1) vorgesehen ist.

5. Vorrichtung gemäß Anspruch 1,
**dadurch gekennzeichnet,**
**daß** ein Zentrifugalpumprad (22) dem Rotor nachgeschaltet ist zur Druckerhöhung hinter dem Hochschermischer (10).

6. Vorrichtung gemäß Anspruch 1,
**dadurch gekennzeichnet,**
**daß** dem Hochschermischer (10) ein mit Unterdruck beaufschlagbarer Zwischenbehälter (19) nachgeschaltet ist, zur Verdampfung von in der Zuckerwarenrohmasse (21) enthaltenen Wasser (20) unter Ausnutzung der in ihr gespeicherten Wärme.

7. Verfahren zur Herstellung flüssiger Zuckerwarenrohmasse
mit Zuführen von zuckerhaltigen Trockenkomponenten (1) und von Flüssigkomponenten (11) zu einem Mischgerät, sowie
anschließendem Hochschermischen, bei dem die Komponenten mit einem Rotor intensiv gerührt und durch die sich dabei direkt am Zuckerkristall entwickelnde Reibungswärme durch eine Verflüssigung des Zuckerkristalls verflüssigt werden, wobei die Drehzahl des Rotors in Abhängigkeit der Temperatur im Hochschermischer durch eine Regeleinrichtung angepasst wird.

8. Verfahren gemäß Anspruch 7,
**dadurch gekennzeichnet,**
**daß** das Hochschermischen umfaßt, die Komponenten in einem Gehäuse auf einen Rotor zu geben, der sie mit Mischflügel in Axialrichtung lenkt und durch Mahlspalte drückt, die von den Mischflügeln an ihren radial äußeren Enden mit Statorelementen gebildet werden, mit denen die Mischflügel kämmend ineinandergreifen und die an der Innenwand des Gehäuses radial nach innenragend ringförmig angeordnet sind.

9. Verfahren gemäß Anspruch 7,
**dadurch gekennzeichnet,**
**daß** die Trockenkomponenten Zuckerwarenausschuß enthalten.

10. Verfahren gemäß Anspruch 7,
**dadurch gekennzeichnet,**
**daß** die Flüssigkomponenten Aroma- und Farbstoffe enthalten.

11. Verfahren gemäß Anspruch 7,
**dadurch gekennzeichnet,**
**daß** der aus dem Hochmischer kommende flüssige Zuckerwarenrohmasse in Unterdruck in ihr enthaltenes Wasser entzogen wird unter Ausnutzung der in ihr gespeicherten Wärme.

## Claims

1. Apparatus for producing liquid raw materials for confectionery with at least one metering device for feeding sugar-containing dry components (1) and liquid components (11), and also with a mixing device (10), **characterised in that** the mixing device (10) is a shear mixer and that the components (1, 11) are intensively stirred by a rotor and are liquefied by a liquefaction of the sugar crystal due to the frictional heat produced directly on the sugar crystal, and that a control device (16) is provided which effects an adaptation of the rotational speed of the rotor in dependence of the temperature in the shear mixer (10).

2. Apparatus as claimed in Claim 1, **characterised in that** the shear mixer (10) has a housing in which is provided the rotor which guides the components in the axial direction by mixing blades, wherein the mixing blades interengage so as to mesh with stator elements which are disposed in a ring and projecting radially inwards on the inner wall of the housing, forming milling gaps on their radially outer ends.

3. Apparatus as claimed in Claim 1, **characterised in that** components flow continuously through the shear mixer (10) and that the shear mixer (10) has a component feed zone (9) in a region which is at the front in the flow direction as well as an outlet in a region which is at the rear in the flow direction, wherein the rotor is provided in an intermediate region (14).

4. Apparatus as claimed in Claim 1, **characterised in that** a premixer (2) is provided for homogenisation of dry components (1).

5. Apparatus as claimed in Claim 1, **characterised in that** a centrifugal pump wheel (22) is disposed downstream of the rotor in order to increase the pressure behind the shear mixer (10).

6. Apparatus as claimed in Claim 1, **characterised in that** an intermediate container (19) to which a partial vacuum is suppliable is disposed downstream of the shear mixer (10) for evaporation of water contained in the raw material for confectionery (21) utilising the heat stored therein.

7. Method of producing liquid raw material for confectionery comprising feeding sugar-containing dry components (1) and liquid components (11) to a mixing device, as well as subsequent shear mixing, in which the components are intensively stirred with a rotor and liquefied by liquefaction of the sugar crystal caused by frictional heat developing directly on the sugar crystal, wherein the speed of the rotor is adapted as a function of the temperature in the shear mixer by a control device.

8. Method as claimed in Claim 7, **characterised in that** the shear mixing comprises placing the components in a housing onto a rotor which guides them by mixing blades in the axial direction and presses them through milling gaps which are formed by the mixing blades on their radially outer ends with stator elements with which the mixing blades interengage so as to mesh and which are disposed in a ring projecting radially inwards on an inner wall of the housing.

9. Method as claimed in Claim 7, **characterised in that** the dry components contain confectionery rejects.

10. Method as claimed in Claim 7, **characterised in that** the liquid components contain flavourings and colouring agents.

11. Method as claimed in Claim 7, **characterised in that** the water contained in the liquid raw material for confectionery coming from the shear mixer is extracted in a partial vacuum utilising the heat stored therein.

## Revendications

1. Dispositif de fabrication d'une masse de bonbon liquide comprenant au moins un dispositif de dosage pour l'amenée de composants secs saccharifères (1) et de composants liquides (11), ainsi qu'un mélangeur (10), **caractérisé en ce que** le mélangeur (10) est un mélangeur à fort cisaillement et **en ce que** les composants (1, 11) par le biais d'un rotor sont soumis à une agitation intensive et qu'ils sont rendus liquides du fait de la chaleur de friction qui s'exerce ce faisant directement au niveau du cristal de sucre par liquéfaction du cristal de sucre, et **en ce qu'**un dispositif de régulation (16) est prévu, qui, en fonction de la température qui règne dans le mélangeur à fort cisaillement (10) opère une adaptation du régime de vitesse du rotor.

2. Dispositif selon la revendication 1, **caractérisé en ce que** le mélangeur à fort cisaillement (10) comporte un carter qui abrite le rotor, qui avec des aubes mélangeuses oriente les composants dans le sens axial, les aubes mélangeuses s'engrenant ce faisant mutuellement avec des éléments de stator disposés de façon annulaire sur la paroi intérieure du carter en dépassant radialement vers l'intérieur en formant des fentes de concassage au niveau de leurs extrémités radialement extérieures.

3. Dispositif selon la revendication 1, **caractérisé en ce que** le mélangeur à fort cisaillement (10) est traversé de façon ininterrompue par des composants et **en ce qu'**il comprend une zone d'amenée des composants (9) située dans une zone avant par rapport au sens de l'écoulement, ainsi qu'une sortie située dans une zone arrière par rapport au sens de l'écoulement, le rotor étant prévu dans une zone intermédiaire (14).

4. Dispositif selon la revendication 1, **caractérisé en ce qu'**un prémélangeur (2) est prévu pour l'homogénéisation de composants déshydratés (1).

5. Dispositif selon la revendication 1, **caractérisé en ce qu'**une roue de pompe centrifuge (22) est couplée à la suite du rotor pour augmenter la pression derrière le mélangeur à fort cisaillement (10).

6. Dispositif selon la revendication 1, **caractérisé en ce qu'**un réservoir intermédiaire à dépression (19) est couplé à la suite du mélangeur à fort cisaillement (10) pour évaporer l'eau (20) contenue dans la masse de bonbon (21) en exploitant la chaleur accumulée dans celle-ci.

7. Procédé de fabrication d'une masse de bonbon liquide avec amenée de composants secs saccharifères (1) et de composants liquides (11) à un mélangeur, puis mélange sous fort cisaillement, au cours duquel les composants sont mis sous agitation intensive par un rotor et sont rendus liquides par liquéfaction du cristal de sucre du fait de la chaleur de friction directement exercée sur le cristal de sucre, le régime de vitesse du rotor étant adapté par un dispositif de régulation en fonction de la température qui règne dans le mélangeur à fort cisaillement.

8. Procédé selon la revendication 7, **caractérisé en ce que** le fort cisaillement comprend le transfert des composants enfermés dans un carter à un rotor qui les oriente avec des aubes mélangeuses dans la direction axiale et les comprime à travers des fentes de concassage qui sont formées par les aubes mélangeuses au niveau de leurs extrémités radialement extérieures avec des éléments de stator avec lesquels les aubes mélangeuses s'engrènent mutuellement et qui sont disposés de façon annulaire sur la paroi intérieure du carter en dépassant radialement vers l'intérieur.

9. Procédé selon la revendication 7, **caractérisé en ce que** les composants secs contiennent des débris de bonbons.

10. Procédé selon la revendication 7, **caractérisé en ce que** les composants liquides contiennent des arômes et des colorants.

11. Procédé selon la revendication 7, **caractérisé en ce que** l'on soutire de la masse de bonbon liquide sortant du mélangeur à fort cisaillement sous vide l'eau qu'elle renferme en exploitant la chaleur qu'elle a accumulée en elle.
